# EUROPEAN PATENT SPECIFICATION

(11) **EP 3 405 282 B1**
(45) Date of publication and mention of the grant of the patent: **30.08.2023**
(21) Application number: 17703787.6
(22) Date of filing: 19.01.2017
(51) Int. Cl.: B01J 2/12

(54) **APPARATUS FOR GRANULATING MATERIAL COMPRISING ASH**
VORRICHTUNG ZUR GRANULIERUNG VON AUSGANGSMATERIAL MIT ASCHE
DISPOSITIF DE GRANULATION POUR MATÉRIAUX COMPRENANT DES CENDRES

(30) Priority: 20.01.2016 FI 20165034
(43) Date of publication of application: 28.11.2018
(73) Proprietor: Rakeistus Oy, 90620 Oulu (FI)
(72) Inventor: LESKINEN, Teemu, 90570 Oulu (FI); PELKONEN, Juha, 90540 Oulu (FI)
(74) Representative: Kolster Oy Ab
(86) International application number: PCT/FI2017/050024
(87) International publication number: WO 2017/125646

(56) References cited:
- EP-A2- 1 849 518
- DE-A1- 3 819 910
- DE-A1- 3 924 617
- FR-A1- 2 359 638
- US-A- 3 825 193
- US-A- 5 601 873

## Description

### FIELD

The present invention relates to granulation apparatuses. More particularly, the present invention relates to apparatuses used for granulating material comprising ash.

### BACKGROUND

Material comprising ash may be granulated using a granulation drum. The granulated material may be used, for example, as a fertilizer. The material may be easier to transport and to spread to a wanted area when the material is in granulated form. It may be beneficial to enhance the granulation process in order to attain granulated material having increased uniform quality. Documents DE3819910, EP1849518 and US3825193 relate to previously known technology.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following embodiments will be described in greater detail with reference to the attached drawings, in which
Figures 1A to 1B illustrate an apparatus according to some embodiments of the invention;
Figure 2 illustrates an embodiment;
Figure 3 illustrates an embodiment;
Figures 4A to 4B illustrate some embodiments;
Figures 5A to 5C illustrate the claimed invention;
Figure 6 illustrates a block diagram according to an embodiment;
Figure 7 illustrates a flow diagram according to an embodiment of the invention; and
Figures 8 and 9 illustrate some embodiments.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

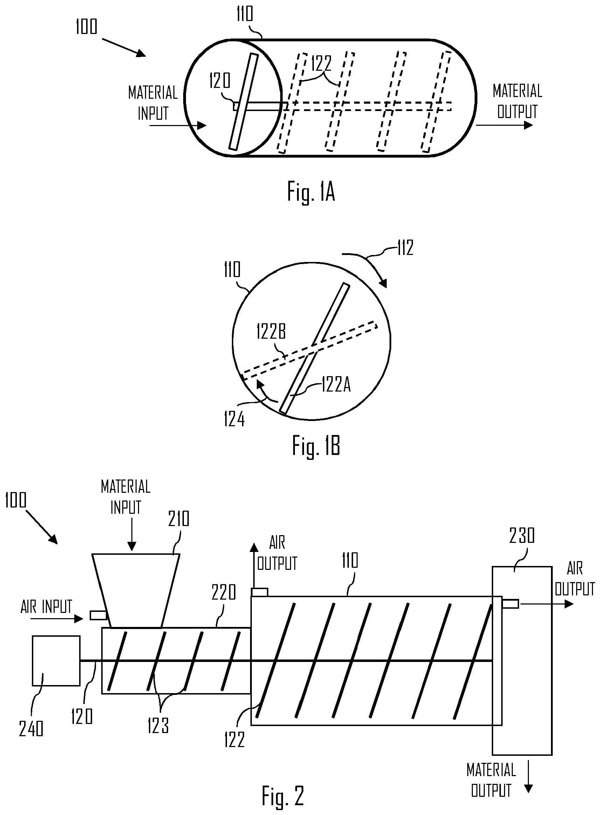

Figures 1A to 1B illustrate an apparatus 100 according to an embodiment of the invention. The apparatus 100 may be referred also to as a granulation apparatus or a granulation machine, for example. Referring to Figure 1A, the apparatus 100 is configured to granulate material comprising ash. The apparatus 100 comprises a granulation drum 110 configured to granulate material by rotating, wherein the granulation drum 110 comprises an input for receiving the material and an output for outputting the material. The input may be situated at the area to which the material is inputted (shown with an arrow in Figure 1A). The output may be similarly indicated with an arrow in Figure 1A.

Still referring to Figure 1A, the apparatus 100 comprises a rotation member 120 comprising at least one blade 122, the rotation member 120 being disposed at least partially within the granulation drum 110, wherein at least a portion the at least one blade 122 is arranged at an angle with respect to a rotation axis of the rotation member 120 such that, when the rotation member 120 rotates, the at least one blade 122 moves the material towards the output of the granulation drum 110.

In an embodiment, the inputted material comprises only ash. Also water may be used with the ash in order to generate enough moisture for granulation.

The outputted material may be substantially granulated into larger particle size compared with the inputted material.

The granulation drum 110 may be inputted with the material comprising ash and/or some other fines. For example, the material may further comprise Phosphorus (P), Calcium (Ca), Potassium (K), Boor (B), lime, sludge, and/or dried feces, to name a few examples. The material may comprise some other fines. As the granulation drum 110 rotates, the inputted material may granulate such that the particle size of the material may increase. Thus, the outputted material may be substantially granulated, i.e. the outputted material may have an increased particle size compared with the inputted material. However, the at least one blade 122 may be configured such that it moves the material towards the output, wherein the material may comprise the inputted material, and/or granulated material. That is, at least some of the material outputted may have the same particle size as when the material was inputted.

Depending on the moisture content of the inputted material, water or some other liquid may be used in the granulation process. For example, if the moisture content of the inputted material increases, the particle size may increase during the granulation process. That is, the granulation drum 110 may output granulated material having a larger particle size compared to a situation in which less water is used or the moisture content of the inputted material is lower. The water or some other liquid may be inputted to granulation drum 110, for example.

The granulation drum 110 may be operatively connected and/or comprise a motor, such as an electric or diesel motor, configured to rotate the granulation drum 110. Some other means may also be used to rotate the granulation drum 110. One example may be to use wind power or water power. For example, the motor may produce 75 kW of power. In one example, the granulation drum 110 may be about 300 cm long and have a diameter of around 120 cm. For example, the rotation speed of the granulation drum 110 may be 20 rounds per minute.

The rotation member 120 may enhance the granulation process by providing a way to granulate the inputted material with a controllable speed. That is, the rotation member 120 may enable the material to be outputted with a wanted speed. This may also enables the material to be inputted with a wanted speed. Thus, the material may be within the granulation drum 110 (i.e. being granulated) for a wanted time. For example, if the material would be transferred from the input to the output of the granulation drum 110 using only gravity, the process may be more difficult to control. For example, the output of the material may in such case be more irregular. However, as the rotation member 120 is used, the process may be more controllable and, for example, the time the material is in the granulation drum 110 may be estimated more accurately. This may provide better quality and/or the quality may be more uniform.

In an embodiment, the granulation drum 110 is tilted such that the input of the granulation drum 110 is above the output of the granulation drum 110. For example, the granulation drum 110 may be tilted 2 degrees or 10 degrees.

In an embodiment, the input of the granulation drum 110 is at the same level with the output of the granulation drum 110. Thus, the rotation member 120 may be the only part transferring the material from the input to the output.

In an embodiment, the output of the granulation drum 110 is open. In an embodiment, the input of the granulation drum 110 is open. In an embodiment, the output and/or the input of the granulation drum 110 are closed. In such case, the granulation drum 110 may comprise opening(s) to allow the material to be inputted and/or outputted. The opening(s) may be situated at side of the granulation drum 110. For example, the opening for the output may be situated between middle point and the output end of the granulation drum 110 at the side of the granulation drum 110. For example, input end of the granulation drum 110 may be open, but the output end may be closed.

Referring to Figure 1A, as said at least a portion of the at least one blade 122 may be arranged at an angle to the rotation axis of the rotation member 120. In the example, of Figure 1A the rotation axis may be parallel with the rotation member 120. Thus, the at least one blade 122 may be at an angle with respect to the rotation axis of the rotation member 120. It needs to be noted that even though in Figure 1A the rotation member 120 is illustrated having an axle it may not be necessarily required. For example, the rotation member 120 may be formed by one or more blades 122 which may rotate.

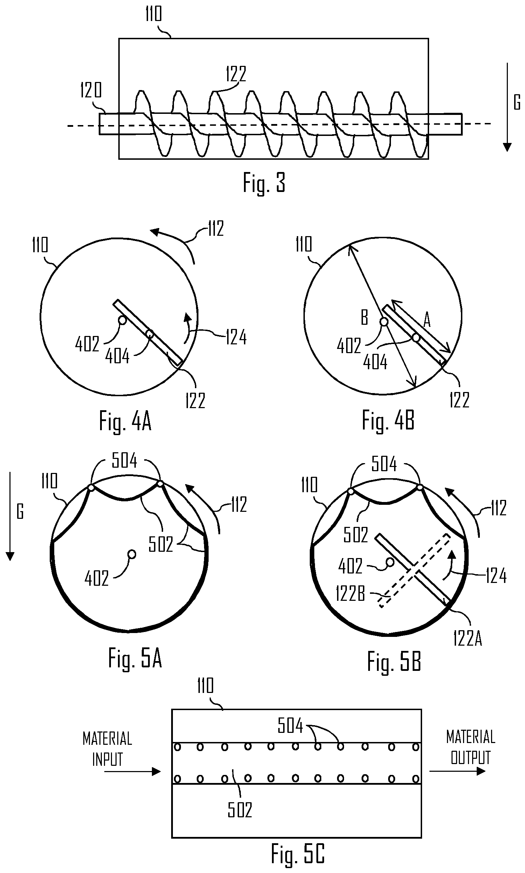

The angle between the rotation axis and at least the portion of the at least one blade 122 may enable the at least one blade 122 to move the material within the drum towards the output of the granulation drum 110. The angle needs to be understood in a broad sense. For example in Figure 3, at least a portion of the at least one blade 122 may be at an angle with respect to its rotation axis. In the example of Figure 1A, the blades 122 may each be at an angle with the rotation axis of the rotation member 120.

In an embodiment, with reference to Figure 3, the rotation member 120 comprises one blade 122. The blade 122 of Figure 3 may be helical such that there may be an angle between at least one portion of the blade 122 and the rotation axis. Thus, the rotation member 120 may comprise a screw conveyor as shown in Figure 3. The blade angle of the screw conveyor may enable the material to be transferred from the granulation drum input to the output as the screw conveyor rotates.

Referring to Figure 1B, the apparatus 100 is illustrated from end of the apparatus 100. Thus, the rotation member 120 may be shown being at least partially within the granulation drum 110. An arrow 112 may illustrate a rotation direction of the granulation drum 110. Similarly, an arrow 124 may illustrate a rotation direction of the rotation member 120. The rotation of the rotation member 120 may be shown with the at least one blade 122 moving from a position 122A to a position 122B. As the at least one blade 122 rises, material may rise on the at least one blade 122. As the rotation member 120 keeps rotating, gravity will at some point pull the material of the at least one blade 122. The material may thus drop to the bottom area of the granulation drum 110. During the time the material is on the at least one blade 122, the material may move towards the output of the granulation drum 110 due to the angle of the at least one blade 122 and/or the angle of a portion of the at least one blade 122 with respect to the rotation axis of the rotation member 120. That is, as the material is on a blade, the portion of the blade on which the material is, may be located X length away of the input of the granulation drum 110. When the material is pulled, by gravity, of the blade, said portion of the blade may be located Y length away from the input of the granulation drum 110, wherein Y is larger than X. Therefore, the material may move towards the output according to the rotation of the rotation member 120.

In an embodiment, the granulation drum 110 and the rotation member 120 rotate to the same direction. In another embodiment, the granulation drum 110 and the rotation member 120 rotate to opposite directions.

Figure 2 illustrates the apparatus 100 according to an embodiment of the invention. Referring to Figure 2, the apparatus may further comprise a mixer 220 arranged to moisturize and/or mix the material, wherein the mixer 220 may be operatively connected to the input of the granulation drum 110. That is, the mixer 220 may moisturize and/or mix the material before it is inputted to the granulation drum 110. In an embodiment, the output of the mixer 220 is situated within the granulation drum 110. If the mixer 220 is only arranged to mix the material, the apparatus 100 may further comprise an additional humidifier configured to moisturize the material. For example, the additional humidifier may be situated within the granulation drum 110.

In an embodiment, the mixer 220 comprises a liquid input (e.g. water input) configured to receive liquid. The liquid input may also be a part of the apparatus 100 providing liquid to the mixer 220. The mixer 220 may then mix the inputted material and the inputted liquid. Thus, in a way it may be understood that the inputted liquid (e.g. water) moisturizes the inputted material before the moisturized material is inputted to the granulation drum 110. Some of the material and/or liquid may mix in the granulation drum 110. In some embodiment, the liquid input may extend into the granulation drum 110. Therefore, the liquid input may also provide water directly to the granulation drum 110 in some embodiments. Even though there would not be a liquid output at the granulation drum, some of the liquid may be transferred from the mixer 220 to the granulation drum 110.

In an embodiment, the mixer 220 comprises one or more liquid nozzles (e.g. water nozzles). The liquid nozzle(s) may output water into the mixer 220. There may be, for example, 20 liquid nozzles in the mixer 220. The one or more liquid nozzles may be situated such that they are substantially evenly distributed within the mixer 220. In an embodiment, the liquid nozzles are adjacent to each other and spaced apart from each other.

In an embodiment, the granulation drum 110 comprises a liquid output (e.g. water output) configured to provide liquid into the granulation drum 110. The liquid output may comprise, for example, one or more nozzles.

In an embodiment, the apparatus 100 comprises a gas input. The gas input may comprise input for one or more gases, such as carbon dioxide, air, oxygen, to name a few. The gas input may output the gas or gases into the mixer 220 and/or into the granulation drum 110. For example, carbon dioxide may increase the efficiency of the granulation process in the granulation drum 110. Also it may provide a nice way to decrease emissions in a plant if, for example, carbon dioxide may be used in the granulation process.

The apparatus 100 may comprise one or more material inputs 210 which are configured to receive material, such as ash and/or some other fines. The one or more material inputs 210 may be operatively connected to the granulation drum 110 or to the mixer 220. In an embodiment, the granulation drum 110 may be further configured to mix the material. Thus, the apparatus 100 may not necessarily require the mixer 220. Further, a moisturizer operatively connected with the granulation drum 110 may moisturize the material. For example, simply a water hose or other liquid input may be used for such purpose.

In an embodiment, the mixer 220 comprises two axels each axel having one or more blades. The blades of the different axels may be interlocked to each other. Such structure may enable the inputted material to be mixed efficiently, for example, with water. Further, the explained structure may cause the material to be transferred towards the input of the granulation drum. For example, the blades may be in an angle such that the material moves towards the output of the mixer 220 when the axels rotate. This may be similar solution as the one used with the rotation member 120.

In an embodiment, the output of the mixer 220 is at least partially within the granulation drum 110. Thus, the material may be efficiently transferred into the granulation drum 110.

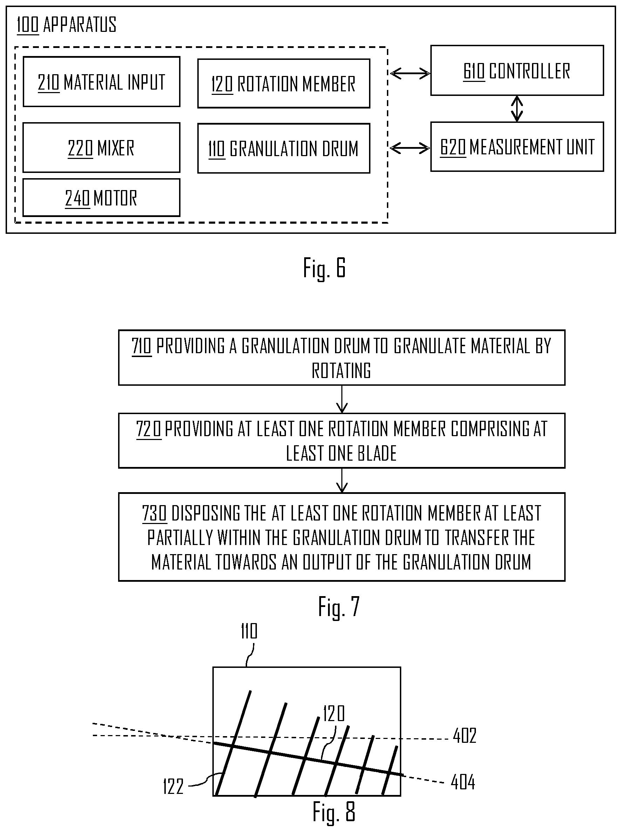

In an embodiment, the material input 210 comprises a material measurement unit configured to measure the amount and/or type of material inputted to the apparatus 100. This may be discussed more detail with reference to Figure 6.

In an embodiment, the material input 210 comprises a rotary feeder or similar element configured to control the amount of material inputted to the apparatus 100.

The apparatus 100 may comprise a material output 230 configured to output the granulated material to a wanted direction. For example, it may be beneficial to provide the output such that the material is outputted downwards such that it may be loaded on a lorry, truck, or in a container.

The apparatus 100 may comprise a motor 240 configured to rotate the rotation member 120. The motor 240 may be the same or another motor that may be used to rotate the granulation drum 110. The motor 240 may be an electric motor or diesel motor, for example. Other means to produce power or force to rotate the rotation member 120 may be equally possible.

In an embodiment, the rotation member 120 extends inside the mixer 220. Thus, the rotation member 120 may be used to transfer the material from the mixer 220 and/or from the material input 210 to the granulation drum 110, and further to the material output 230. The rotation member 120 may comprise one or more blades 123 within the mixer 220. These blades 123 may be similar or different to blades 122. The one or more blades 123 may be used to mix the material and/or to transfer the material to the granulation drum 110. Gravity may also be utilized, as shown in Figure 2, in the material input and/or in the material output.

In an embodiment, the mixer 220 comprises one or more axels having one or more blades 123. These one or more axels may be part of the rotation member 120. The one or more axels may also be separate parts of the apparatus 100 which may be operated independently. For example, if there are two axels, the blades of the axels may clean each other when operated. That is, the axels may be arranged such that the blade(s) of the first axel and the blade(s) of the second axel at least partially intermesh. The blade(s) of the first axel and the blade(s) of the second axel may at least partially touch each other. In an embodiment, the blade(s) of the first axel and the blade(s) of the second axel are powered by the motor 240.

Figure 3 illustrates an embodiment. Referring to Figure 3, the rotation member 120 may comprise one or more helix blades 122. As the helix blade 122 rotates, it may transfer the material to a wanted direction. Rotation axis of the rotation member 120 may be shown with a dotted line.

Figures 4A to 4B illustrate some embodiments. Referring to Figure 4A, example rotation directions (112, 124) of the granulation drum 110 and the rotation member 120 may be shown. Points 402, 404 may illustrate rotation axes of the granulation drum 110 and the rotation member 120. It needs to be noted that the rotation axes may extend to a direction that is parallel with a direction from the input to the output of the granulation drum 110. Thus, the illustration of the rotation axes 402, 404 may be dot-like in Figure 4A.

In an embodiment, the rotation axis 404 of the rotation member 120 is substantially parallel with the rotation axis 402 of the granulation drum 110. Thus, the rotation axes 402, 404 may extend to same direction(s).

In an embodiment, the rotation axes 402, 404 are divergent compared with each other. This may mean that the rotation axes 402, 404 are not parallel. Thus, the rotation axes 402, 404 may be non-parallel compared with each other. Example of this may be seen in an embodiment of Figure 8 in which the rotation axes 402, 404 may be illustrated as divergent compared with each other.

In an embodiment, the rotation member 120 adapted and dimensioned such that the circumference of the rotation member 120 is smaller at the output of the granulation drum 110 compared with the circumference of the rotation member 120 at the input of the granulation drum 110. The circumference of the rotation member 120 may decrease along the rotation member 120 such that it gets smaller at the output area compared with the input area. This may mean that the rotation member is thinner at one end compared with another end of the rotation member 120. This may be seen in Figure 8, for example. For example, if the rotation axes 402, 404 are divergent as in Figure 8, the rotation member 120 may be beneficial to be configured to become thinner at the output of the granulation drum 110. The circumference here may mean the outer perimeter which the at least one blade 122 draws when the rotation member 120 rotates.

In an embodiment, the rotation axis 404 of the rotation member 120 and the rotation axis 402 of the granulation drum 110 are spaced at a distance from each other. In an embodiment, the rotation axes 402, 404 cross each other.

In an embodiment, at least one of the rotation axes 402, 404 is eccentric. This may mean that a rotation axis is not dot-like. For example, a rotation axis may move on a circle-like track, or on an ellipse-like track. This may be beneficial, for example, for the rotation axis 404 of the rotation member 120, as the rotation member 120 may then better touch different inner-parts of the granulation drum 110. Such may be beneficial when the rotation speed of the granulation drum 110 and the rotation member 120 is substantially the same.

Referring to Figure 4B, a diameter of the rotation member 120 equals to A, an inner diameter of the granulation drum 110 equals to B, wherein B may be at least 25 % larger than A. For example, ratio of B to A may be 3 to 2. As the diameter of the rotation member 120 may be smaller than the inner diameter of the granulation drum 110, it may be beneficial to situate the rotation member 120 such that the rotation axis 404 of the rotation member 120 is below the rotation axis 402 of the granulation drum 110. This may enable the rotation member 120 to better transfer the material towards the output of the granulation drum 110. Further, it may be beneficial that the rotation member 120 has smaller diameter than the inner diameter of the granulation drum 110 because more material may be inputted to the granulation drum 110 with a lower risk of blockage.

Figures 5A to 5C illustrate the present invention.

Referring to Figure 5A, the apparatus 100 further comprises at least one layer 502 disposed at least partially on the inner surface of the granulation drum 110, wherein the at least one layer 502 is hangably attached to the granulation drum 110 such that at least a portion of the at least one layer 502 hangs when said portion is above the rotation axis 402 of the granulation drum 110. That is, said portion hangs when the gravity pulls said portion as shown in Figure 5A. When said portion is below the rotation axis 402, it may lay against the inner surface of the granulation drum 110.

The at least one layer 502 may be attached to the granulation drum 110 using one or more fixing points 504. The one or more fixing points 504 may be used such that they extend from the input to the output of the granulation drum 110 as shown in Figure 5C. The at least one layer 502 may then be as long as the granulation drum 110, for example. It is also possible to use shorter layer(s) 502. In Figure 5C, only one layer 502 is shown, but as described, it may be possible to cover substantially the whole granulation drum 110 with one or more layers 502. It may be beneficial to use more than one layer 502 such that the layers 502 may hang freely within the granulation drum 110 such that the layers 502 may not so easily interfere with, for example, the rotation of the rotation member 120.

In an embodiment, the at least one layer 502 comprises rubber and/or rubber-like material. The at least one layer 502 may be made of rubber. The elastic properties of the at least one layer 502 may be beneficial in order to enable the hanging but at the same time enable the at least one layer 502 to be attached firmly to the granulation drum 110.

In an embodiment, the at least one layer 502 is attached from longer sides of the at least one layer 502 to the granulation drum 110. This may be shown in Figures 5A and 5C, for example.

Referring to Figure 5B, the rotation member 120 may be arranged and dimensioned such that the at least one blade 122 touches the at least one layer 502 when the at least one layer 502 is against the inner surface of the granulation drum 110. In an embodiment, the rotation member 120 is arranged and dimensioned such that the at least one blade 122 does not touch the at least one layer 502 when the at least one layer 502 is above the rotation axis 402 of the granulation drum 110. Thus, the at least one blade 122 may scrape the surface of the at least one layer 502 (e.g. clean the at least one layer 502), but still allow the at least one layer to hang freely on the upper part of the granulation drum 110.

The at least one layer 502 may bring some benefits. The inputted material may start to accumulate to the inner surface of the granulation drum 110 or on the at least one layer 502. As the at least one layer 502 may drop in to hanging position, it may at the same time cause a force to the accumulated material, thus cleaning the at least one layer 502 and/or the inner surface of the granulation drum 110. This may help to prevent blockages in the apparatus 100.

Figure 6 illustrates a block diagram of the apparatus 100 according to an embodiment. Referring to Figure 6, the apparatus 100 may comprise the granulation drum 110 and the rotation member 120. The apparatus 100 may further comprise the material input 210. The apparatus 100 may further comprise the mixer 220. The apparatus 100 may further comprise the motor 240 and/or some other power generation means.

In an embodiment, the apparatus 100 further comprises a controller 610 configured to enable controlling one or more operation parameters of the apparatus 100. The controller 610 may be operatively connected to the material input 210, the mixer 220, the rotation member 120, the granulation drum 110, and/or to the motor 240. For example, the operation parameters may comprise water input, material input for different materials (e.g. ash, P, K, Ca), rotation speed of the granulation drum 110, rotation speed of the rotation member 120, direction of rotation of the granulation drum 110, and/or direction of rotation of the rotation member 120, amount of inputted water, amount of inputted gas (e.g. carbon dioxide), to name a few examples. The controller 610 may be at least partially mechanically operated and/or comprise one or more circuitries. The controller 610 may comprise a user interface enabling an operator to configure the parameters. Further, the controller 610 may comprise computer program and/or logic which may be configured to automatically configure different operation parameters of the apparatus 100.

In an embodiment, the apparatus 100 further comprises a measurement unit 620. The measurement unit 620 may be configured to measure one or more values. For example, the measurement unit 620 may be configured to measure amount of inputted material, amount of outputted material, amount of outputted granulated material, granular size, moisture content of the material (e.g. inputted and/or outputted material or granulated material), and/or color of the material (e.g. inputted and/or outputted material or granulated material).

For example, the measurement unit 620 may determine moisture content of the granulated material. The measurement unit 620 may comprise one or more moisture/humidity sensors and/or one or more visual detectors (e.g. cameras). Thus for example, computer vision may be used to determine the granular size of the outputted granulated material and/or moisture content of the granulated material based on color of the granulated material. Using the measurement unit 620 may enable to control the operation parameters of the apparatus 100 in a more precise manner.

In an embodiment, the measurement unit 620 comprises at least one moisture sensor. The measurement unit 620 may determine, for example, moisture percent of the material based on the moisture sensor data. The moisture sensor(s) may be situated in the mixer 220, in the granulation drum 110, and/or at the material input 210. More than one moisture sensor may be used.

In an embodiment, the measurement unit 620 comprises at least one temperature sensor. The measurement unit 620 may determine, for example, temperature of the material based on the temperature sensor data. The temperature sensor(s) may be situated in the mixer 220, in the granulation drum 110, and/or at the material input 210. More than one temperature sensor may be used. For example, temperature in the granulation drum 110 may be determined. Based on the temperature, for example, the controller 610 may be configured to increase or decrease the temperature. One way to increase the temperature may be to input hot carbon dioxide into the process. One way to decrease the temperature may be to input cold water into the process. For example, the controller 610 may be able to control the temperature of the inputted water. Such control may be based on a mix of cold and hot water from water pipes.

In an embodiment, the measurement unit 620 comprises at least one gas sensor configured to measure gas flow (e.g. a flowmeter measuring kg/s). For example, flow of inputted carbon dioxide may be measured. As explained above, the carbon dioxide may inputted into the mixer 220 and/or into the granulation drum 110. There may be one gas sensor to measure carbon dioxide and another to measure flow of air into the granulation drum 110, for example.

In an embodiment, the gas sensor provides sensing data, wherein the measurement unit 620 determines composition of at least some gas substances in the granulation drum 110. For example, the controller 610 may determine whether there is enough carbon dioxide in the granulation drum 110 based on the determination, and cause inputting of more or less carbon dioxide based on the determination.

In an embodiment, the measurement unit 620 comprises at least one liquid flow sensor (e.g. a flowmeter measuring kg/s) configured to determine flow of liquid into the apparatus 100. For example, flow of water may be determined by said sensor(s). Thus, the controller 610 may be able to decrease or increase the amount of inputted water based on the determination.

Thus, the measurement unit 620 may comprise a plurality of different sensors applied in different parts of the apparatus 100.

In an embodiment, the controller 610 and the measurement unit 620 are connected to each other. For example, data may be transmitted between the two using wireless and/or wired connection.

In an embodiment, the controller 610 is configured to control moisture content of the inputted material based on the measurement by the measurement unit 620. That is, if the measurement unit 620 determines that the moisture content of the granulated material is too low, the controller 610 may cause inputting of more water into the process. Similarly, if the measurement unit 620 determines that the moisture content of the granulated material is too high, the controller 610 may cause inputting of less water into the process. The water may be inputted to the mixer 220, to the material input 210, to the granulation drum 110 and/or to water input operatively connected to the mixer 220. In one example, the measurement unit 620 may determine the moisture of the material in the granulation drum 110. Based on the determination, the controller 610 may cause inputting less or more water into the mixer 220, for example. For example, the controller 610 may control the liquid input of the mixer 220.

In an embodiment, the controller 610 is configured perform at least one of the following steps based on the measurement by the measurement unit 620: control amount of inputted water; control rotation speed of the rotation member 120; and control rotation speed of the granulation drum 110.

For example, if the controller 610 determines that the moisture content of the material in the granulation drum 110 and/or the moisture content of the outputted material is too low, the controller 610 may cause inputting of more water into the mixer 220 and/or into the granulation drum 110. The controller 610 may cause the rotation member 120 to rotate slower as the slower rotation may cause the material to be longer in the granulation drum 110, and thus granulate it better. The controlling of the rotation speed and the inputted water may happen at the same time or independently depending on the situation.

In an embodiment, the controller 610 decreases the rotation speed of the rotation member 120 for a certain time period when it determines that the moisture content of the material in the granulation drum 110 and/or the moisture content of the outputted material is lower than needed. The time period may be, for example, 30 seconds or 1 minute. For example, the moisture content may be below a certain moisture content threshold. At the same time, the controller 610 may cause inputting of more water into the mixer 220 and/or into the granulation drum 110. However, this may not be necessary, as the slower material throughput may enable the material to be granulated longer. As discussed earlier, the moisture content of the material or the outputted material may be determined using moisture sensor(s) or computer vision, for example. After said time period, the controller 610 may cause the rotation speed to increase to previous value.

In an embodiment, the controller 610 decreases the rotation speed of the rotation member 120 for a certain time period when it determines that the granular size of the material in the granulation drum 110 and/or the granular size of the outputted material is smaller than needed. As above, more water may also be caused to be inputted if needed. In an embodiment, the controller 610 increases the rotation speed of the rotation member 120 for a certain time period when it determines that the granular size of the material in the granulation drum 110 and/or the granular size of the outputted material is larger than needed. Similarly, the rotation speed of the granulation drum 110 may be decreased.

The measurement unit 620 may determine that the granular size of the outputted material is too small, and thus the controller 610 may cause input of more water into the process. Similarly, the measurement unit 620 may determine that the granular size of the outputted material is too large, and thus the controller 610 may cause inputting of less water into the process. Similarly, the granular size in the granulation drum 110 may be determined using, for example, one or more cameras in the granulation drum 110, and the input of water may be adjusted accordingly.

In an embodiment, the measurement unit 620 determines the amount of outputted material, wherein the material comprises the non-granulated and granulated material. The controller 610 may thus control the amount of material input such that material is inputted at same rate as it is outputted. Similarly, the measurement may be used to determine that material is not inputted too much.

Therefore, the controller 610 together with the measurement unit 620 may be utilized to automatically and/or semi-automatically control the amount of inputted water and/or material into the apparatus 100. The semi-automatic may mean that the measurement(s) may be at least partially automatic but the controlling may be performed by the operator of the apparatus 100.

In an embodiment, the measurement unit 620 is comprised in the controller 610.

In an embodiment, the apparatus 100 is configured to be placed under an ash silo of a power plant. Thus, the material may not need to be transported from place to another.

In an embodiment, the measurement unit 620 comprises the material measurement unit configured to measure the amount and/or type of material inputted to the apparatus 100.

In an embodiment, controller 610 is configured to control the rotary feeder or similar element configured to enable controlling the amount of material inputted to the apparatus 100.

In an embodiment, controller 610 is configured to control one or more water inputs of the apparatus 100. Such water inputs may be situated in the mixer 220 and/or in the granulation drum, for example.

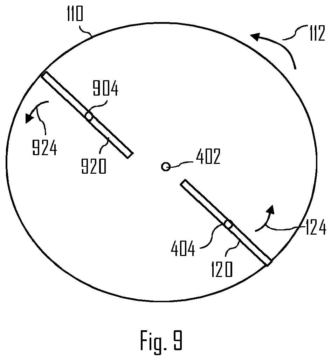

Figure 9 illustrates an embodiment. Referring to Figure 9, the apparatus 100 may comprise a second rotation member 920. The second rotation member may be similar or identical with the rotation member 120 (e.g. a first rotation member 120). Using a second rotation member 920 may increase the efficiency of the granulation process by providing a way to control the material throughput of the apparatus 100 more efficiently. For example, if both rotation members are used, the throughput may be higher than when only one rotation member is used. The controller 610 may control rotation of the second rotation member 920. The second rotation member 920 may be rotated by a motor (e.g. same motor that is used with the first rotation member 120 or another).

In an embodiment, the second rotation member 920 comprises one or more brushes. The brushes may be used to extract material that is attached to the granulation drum 110. This may increase a time period between maintenances as the granulation drum 110 may operate as intended for a longer time.

In an embodiment, the rotation axis 404 of the first rotation member 120 is below the rotation axis 402 of the granulation drum 110.

In an embodiment, the rotation axis 904 of the second rotation member 120 is above the rotation axis 402 of the granulation drum 110.

In an embodiment, the rotation axis 904 of the second rotation member 120 is above the rotation axis 402 of the granulation drum 110 and the rotation axis 404 of the first rotation member 120 is below the rotation axis 402 of the granulation drum 110. This may allow the both rotation members 120, 920 to be fitted within the granulation drum 110 such that they may operate properly.

In an embodiment, the apparatus 100 further comprises a grate or similar element configured to sieve the granulated material. The grate may be located at the output of the apparatus 100. For example, material that has too large or too small granular size may be removed and reprocessed. Further, the different size granular particles may be sorter into two or more sizes.

In an embodiment, referring to Figure 2, the apparatus 100 comprises one or more air inputs for inputting air into the apparatus 100. For example, the air may be inputted from the area of the material input 210. The air may flow through the apparatus 100 (e.g. through the mixer 220 and/or the granulation drum 110) to at least one air output (shown in Figure 2).

There is also provided a method for manufacturing the apparatus 100 for granulating material comprising ash, the method comprising according to an embodiment shown in Figure 7: providing a granulation drum 110 arranged to granulate material by rotating, wherein the granulation drum 110 comprises an input for receiving the material and an output for outputting the granulated material (block 710); providing a rotation member 120 comprising at least one blade 122 (block 720); and disposing the rotation member 120 at least partially within the granulation drum 110, wherein at least a portion of the at least one blade 122 is arranged at an angle with respect to a rotation axis of the rotation member 120 such that, when the rotation member 120 rotates, the at least one blade 122 moves the material towards the output of the granulation drum 110 (block 730). Similarly, the method for manufacturing the apparatus 100 may comprise providing the mixer 220, the material input 210, the motor 240, the controller 610, the measurement unit 620 and/or the material output 230.

In an embodiment, there is provided a method for granulating material comprising ash, the method comprising: inputting the material to a granulation drum 110 of the apparatus 100; causing rotation of the granulation drum 110 in order to granulate the inputted material; causing rotation of a rotation member 120 within the granulation drum 110, the rotation member 120 comprising at least one blade 122 arranged at an angle with respect to a rotation axis of the rotation member 120, wherein the rotation of the rotation member 120 together with the at least one blade 122 causes the material to move towards the output of the granulation drum 110.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus for granulating material comprising ash, the apparatus comprising:
a granulation drum (110) configured to granulate material by rotating, wherein the granulation drum (110) comprises an input for receiving the material and an output for outputting the material; and
a rotation member (120) comprising at least one blade (122), the rotation member (120) being disposed at least partially within the granulation drum (110), wherein at least a portion of the at least one blade (122) is arranged at an angle with respect to a rotation axis (404) of the rotation member (120) such that, when the rotation member (120) rotates, the at least one blade (122) moves the material towards the output of the granulation drum (110), and wherein the apparatus further comprising:
at least one layer (502) disposed at least partially on the inner surface of the granulation drum (110), wherein the at least one layer (502) is hangably attached to the granulation drum (110) such that at least a portion of the at least one layer (502) may drop into a hanging position when said portion is above a rotation axis (402) of the granulation drum (110).

2. The apparatus of claim 1, further comprising:
a mixer (220) arranged to moisturize and/or mix the material, wherein the mixer (220) is operatively connected to the input of the granulation drum (110).

3. The apparatus of any preceding claim, wherein the rotation axis (404) of the rotation member (120) is substantially divergent compared with a rotation axis (402) of the granulation drum (110).

4. The apparatus of any preceding claim, wherein the rotation axis (404) of the rotation member (120) and the rotation axis (402) of the granulation drum (110) are spaced at a distance from each other.

5. The apparatus of any preceding claim, wherein a diameter of the rotation member (120) equals to A and an inner diameter of the granulation drum (110) equals to B, and wherein B is at least 25 % larger than A.

6. The apparatus of any preceding claim, further comprising:
a controller (610) configured to enable controlling one or more operation parameters of the apparatus.

7. The apparatus of any preceding claim, further comprising:
a measurement unit (620) configured to measure at least one of the following: amount of inputted material, amount of outputted material, amount of outputted granulated material, granular size, moisture content of the inputted material, color of the inputted material, moisture content of the outputted material, color of the outputted material, , temperature in the granulation drum (110), humidity in the granulation drum (110), moisture content of the material in the granulation drum (110), water input measurement, carbon dioxide measurement, air measurement.

8. The apparatus of claim 6 or 7, wherein the controller (610) is configured perform at least one of the following steps based on the measurement by the measurement unit (620):
control amount of inputted water;
control rotation speed of the rotation member (120); and
control rotation speed of the granulation drum (110).

9. The apparatus of any preceding claim 6 to 8, wherein the controller (610) comprises one or more circuitries.

10. The apparatus of any preceding claim 7 to 9, wherein the measurement unit (620) comprises a plurality of sensors.

11. The apparatus of claim 9 or 10, wherein the measurement unit (620) and the controller (610) are connected to each other to transfer data between the measurement unit (620) and the controller (610).

12. The apparatus of any preceding claim, wherein the rotation member (120) is a screw conveyor.

13. The apparatus of any preceding claim, further comprising:
a material input operatively connected with the granulation drum (110), the material input comprising a rotary feeder configured to control the amount of material inputted to the apparatus.

14. A method for producing an apparatus for granulating material comprising ash, the method comprising:
providing a granulation drum (110) arranged to granulate material by rotating, wherein the granulation drum (110) comprises an input for receiving the material and an output for outputting the granulated material;
providing a rotation member (120) comprising at least one blade (122); and
disposing the rotation member (120) at least partially within the granulation drum (110), wherein at least a portion of the at least one blade (122) is arranged at an angle with respect to a rotation axis (404) of the rotation member (120) such that, when the rotation member (120) rotates, the at least one blade (122) moves the material towards the output of the granulation drum (110), and wherein
providing at least one layer (502) disposed at least partially on the inner surface of the granulation drum (110), wherein the at least one layer (502) is hangably attached to the granulation drum (110) such that at least a portion of the at least one layer (502) is dropped in to hanging position when said portion is above a rotation axis (402) of the granulation drum (110).

## Patentansprüche

1. Vorrichtung zum Granulieren von Material, das Asche umfasst, wobei die Vorrichtung Folgendes umfasst:
eine Granuliertrommel (110), die dazu ausgelegt ist, Material durch Drehen zu granulieren, wobei die Granuliertrommel (110) einen Eingang zum Empfangen des Materials und einen Ausgang zum Ausgeben des Materials umfasst; und
ein Drehelement (120), das mindestens ein Messer (122) umfasst, wobei das Drehelement (120) mindestens teilweise in der Granuliertrommel (110) angeordnet ist, wobei mindestens ein Abschnitt des mindestens einen Messers (122) mit Bezug auf eine Drehachse (404) des Drehelements (120) in einem Winkel angebracht ist, derart, dass, wenn sich das Drehelement (120) dreht, das mindestens eine Messer (122) das Material zum Ausgang der Granuliertrommel (110) bewegt, und wobei die Vorrichtung ferner Folgendes umfasst:
mindestens eine Schicht (502), die mindestens teilweise auf der Innenfläche der Granuliertrommel (110) angeordnet ist, wobei die mindestens eine Schicht (502) hängbar an der Granuliertrommel (110) befestigt ist, derart, dass mindestens ein Abschnitt der mindestens einen Schicht (502) in eine hängende Position fallen kann, wenn sich der Abschnitt über einer Drehachse (402) der Granuliertrommel (110) befindet.

2. Vorrichtung nach Anspruch 1, die ferner Folgendes umfasst:
einen Mischer (220), der angebracht ist, das Material anzufeuchten und/oder zu mischen, wobei der Mischer (220) mit dem Eingang der Granuliertrommel (110) wirkverbunden ist.

3. Vorrichtung nach einem der vorhergehenden Ansprüche, wobei die Drehachse (404) des Drehelements (120) verglichen mit einer Drehachse (402) der Granuliertrommel (110) im Wesentlichen divergent ist.

4. Vorrichtung nach einem der vorhergehenden Ansprüche, wobei die Drehachse (404) des Drehelements (120) und die Drehachse (402) der Granuliertrommel (110) in einem Abstand voneinander beabstandet sind.

5. Vorrichtung nach einem der vorhergehenden Ansprüche, wobei ein Durchmesser des Drehelements (120) gleich A ist und ein Innendurchmesser der Granuliertrommel (110) gleich B ist, und wobei B mindestens 25% größer ist als A.

6. Vorrichtung nach einem der vorhergehenden Ansprüche, die ferner Folgendes umfasst:
eine Steuerung (610), die dazu ausgelegt ist, das Steuern von einem oder mehreren Betriebsparametern der Vorrichtung zu ermöglichen.

7. Vorrichtung nach einem der vorhergehenden Ansprüche, die ferner Folgendes umfasst:
eine Messeinheit (620), die dazu ausgelegt ist, mindestens eines von Folgendem zu messen: Menge von eingegebenem Material, Menge von ausgegebenem Material, Menge von ausgegebenem granulierten Material, Granulatgröße, Feuchtigkeitsgehalt des eingegebenen Materials, Farbe des eingegebenen Materials, Feuchtigkeitsgehalt des ausgegebenen Materials, Farbe des ausgegebenen Materials, Temperatur in der Granuliertrommel (110), Feuchte in der Granuliertrommel (110) Feuchtigkeitsgehalt des Materials in der Granuliertrommel (110), Wassereingabemessung, Kohlendioxidmessung, Luftmessung.

8. Vorrichtung nach Anspruch 6 oder 7, wobei die Steuerung (610) dazu ausgelegt ist, auf Basis der Messung durch die Messeinheit (620) mindestens einen der folgenden Schritte durchzuführen:
Steuern der Menge von eingegebenem Wasser;
Steuern der Drehgeschwindigkeit des Drehelements (120); und
Steuern der Drehgeschwindigkeit der Granuliertrommel (110) .

9. Vorrichtung nach einem der vorhergehenden Ansprüche 6 bis 8, wobei die Steuerung (610) eine oder mehrere Schaltungen umfasst.

10. Vorrichtung nach einem der vorhergehenden Ansprüche 7 bis 9, wobei die Messeinheit (620) eine Vielzahl von Sensoren umfasst.

11. Vorrichtung nach Anspruch 9 oder 10, wobei die Messeinheit (620) und die Steuerung (610) miteinander verbunden sind, um Daten zwischen der Messeinheit (620) und der Steuerung (610) zu übertragen.

12. Vorrichtung nach einem der vorhergehenden Ansprüche, wobei das Drehelement (120) ein Schneckenförderer ist.

13. Vorrichtung nach einem der vorhergehenden Ansprüche, die ferner Folgendes umfasst:
einen Materialeingang, der mit der Granuliertrommel (110) wirkverbunden ist, wobei der Materialeingang eine Drehzuführung umfasst, die dazu ausgelegt ist, die in die Vorrichtung eingegebene Menge Material zu steuern.

14. Verfahren zum Herstellen einer Vorrichtung zum Granulieren von Material, das Asche umfasst, wobei das Verfahren Folgendes umfasst:
Bereitstellen einer Granuliertrommel (110), die angebracht ist, Material durch Drehen zu granulieren, wobei die Granuliertrommel (110) einen Eingang zum Empfangen des Materials und einen Ausgang zum Ausgeben des granulierten Materials umfasst;
Bereitstellen eines Drehelements (120), das mindestens ein Messer (122) umfasst; und
Anordnen des Drehelements (120) mindestens teilweise in der Granuliertrommel (110), wobei mindestens ein Abschnitt des mindestens einen Messers (122) mit Bezug auf eine Drehachse (404) des Drehelements (120) in einem Winkel angebracht ist, derart, dass, wenn sich das Drehelement (120) dreht, das mindestens eine Messer (122) das Material zum Ausgang der Granuliertrommel (110) bewegt, und wobei
Bereitstellen von mindestens einer Schicht (502), die mindestens teilweise auf der Innenfläche der Granuliertrommel (110) angeordnet ist, wobei die mindestens eine Schicht (502) hängbar an der Granuliertrommel (110) befestigt ist, derart, dass mindestens ein Abschnitt der mindestens einen Schicht (502) in eine hängende Position fallen gelassen wird, wenn sich der Abschnitt über einer Drehachse (402) der Granuliertrommel (110) befindet.

## Revendications

1. Appareil pour la granulation d'un matériau comprenant des cendres, l'appareil comprenant :
un tambour de granulation (110) configuré pour granuler le matériau en tournant, dans lequel le tambour de granulation (110) comprend une entrée pour recevoir le matériau et une sortie pour délivrer le matériau ; et
un élément de rotation (120) comprenant au moins une lame (122), l'élément de rotation (120) étant disposé au moins partiellement à l'intérieur du tambour de granulation (110), dans lequel au moins une partie de l'au moins une lame (122) est agencée à un angle par rapport à un axe de rotation (404) de l'élément de rotation (120), de sorte que lorsque l'élément de rotation (120) tourne, l'au moins une lame (122) déplace le matériau vers la sortie du tambour de granulation (110), et dans lequel l'appareil comprend en outre :
au moins une couche (502) disposée au moins partiellement sur la surface intérieure du tambour de granulation (110), dans lequel l'au moins une couche (502) est fixée en étant suspendue au tambour de granulation (110), de sorte qu'au moins une partie de l'au moins une couche (502) puisse tomber en position suspendue lorsque ladite partie est au-dessus d'un axe de rotation (402) du tambour de granulation (110).

2. Appareil selon la revendication 1, comprenant en outre :
un mélangeur (220) conçu pour humidifier et/ou mélanger le matériau, dans lequel le mélangeur (220) est fonctionnellement connecté à l'entrée du tambour de granulation (110).

3. Appareil selon l'une des revendications précédentes, dans lequel l'axe de rotation (404) de l'élément de rotation (120) est sensiblement divergent par rapport à un axe de rotation (402) du tambour de granulation (110).

4. Appareil selon l'une des revendications précédentes, dans lequel l'axe de rotation (404) de l'élément de rotation (120) et l'axe de rotation (402) du tambour de granulation (110) sont espacés l'un de l'autre d'une certaine distance.

5. Appareil selon l'une des revendications précédentes, dans lequel un diamètre de l'élément de rotation (120) est égal à A, et un diamètre intérieur du tambour de granulation (110) est égal à B, et dans lequel B est au moins 25 % plus grand que A.

6. Appareil selon l'une des revendications précédentes, comprenant en outre :
un dispositif de commande (610) configuré pour permettre de commander un ou plusieurs paramètres de fonctionnement de l'appareil.

7. Appareil selon l'une des revendications précédentes, comprenant en outre :
une unité de mesure (620) configurée pour mesurer au moins l'un des éléments suivants : une quantité de matériau à l'entrée, une quantité de matériau à la sortie, une quantité de matériau granulé à la sortie, une taille de granulés, une teneur en eau du matériau à l'entrée, une couleur du matériau à l'entrée, teneur en eau du matériau à la sortie, une couleur du matériau à la sortie, une température dans le tambour de granulation (110), une humidité dans le tambour de granulation (110), une teneur en eau du matériau dans le tambour de granulation (110), une mesure d'eau à l'entrée, une mesure du dioxyde de carbone, une mesure de l'air.

8. Appareil selon la revendication 6 ou 7, dans lequel le dispositif de commande (610) est configuré pour réaliser au moins l'une des étapes suivantes sur la base de la mesure de l'unité de mesure (620) :
commander une quantité d'eau à l'entrée ;
commander une vitesse de rotation de l'élément de rotation (120) ; et
commander une vitesse de rotation du tambour de granulation (110).

9. Appareil selon l'une des revendications précédentes 6 à 8, dans lequel le dispositif de commande (610) comprend un ou plusieurs ensembles de circuits.

10. Appareil selon l'une des revendications précédentes 7 à 9, dans lequel l'unité de mesure (620) comprend une pluralité de capteurs.

11. Appareil selon la revendication 9 ou 10, dans lequel l'unité de mesure (620) et le dispositif de commande (610) sont connectés l'un à l'autre pour transférer des données entre l'unité de mesure (620) et le dispositif de commande (610).

12. Appareil selon l'une des revendications précédentes, dans lequel l'élément de rotation (120) est un convoyeur à vis.

13. Appareil selon l'une des revendications précédentes, comprenant en outre :
une entrée de matériau fonctionnellement connectée au tambour de granulation (110), l'entrée de matériau comprenant un alimentateur rotatif configuré pour commander la quantité du matériau à l'entrée dans l'appareil.

14. Procédé pour produire un appareil pour la granulation d'un matériau comprenant des cendres, le procédé comprenant :
la fourniture d'un tambour de granulation (110) conçu pour granuler le matériau en tournant, dans lequel le tambour de granulation (110) comprend une entrée pour recevoir le matériau et une sortie pour délivrer le matériau granulé ;
la fourniture d'un élément de rotation (120) comprenant au moins une lame (122) ; et
la disposition de l'élément de rotation (120) au moins partiellement à l'intérieur du tambour de granulation (110), dans lequel au moins une partie de l'au moins une lame (122) est agencée à un angle par rapport à un axe de rotation (404) de l'élément de rotation (120), de sorte que lorsque l'élément de rotation (120) tourne, l'au moins une lame (122) déplace le matériau vers la sortie du tambour de granulation (110), et dans lequel
au moins une couche (502) disposée au moins partiellement sur la surface intérieure du tambour de granulation (110) est fournie, dans lequel l'au moins une couche (502) est fixée en étant suspendue au tambour de granulation (110), de sorte qu'au moins une partie de l'au moins une couche (502) tombe en position suspendue lorsque ladite partie est au-dessus d'un axe de rotation (402) du tambour de granulation (110).
